## Europäisches Patentamt
## European Patent Office
## Office européen des brevets

(19)

(11) Veröffentlichungsnummer : **0 332 852 B1**

(12) **EUROPÄISCHE PATENTSCHRIFT**

(45) Veröffentlichungstag der Patentschrift :
30.09.92 Patentblatt 92/40

(51) Int. Cl.⁵ : **A01K 7/06,** A01K 39/02,
F16K 21/04

(21) Anmeldenummer : **89102400.2**

(22) Anmeldetag : **11.02.89**

(54) **Tränkeventil.**

(30) Priorität : **18.02.88 DE 8802129 U**
**25.03.88 DE 8804053 U**

(43) Veröffentlichungstag der Anmeldung :
**20.09.89 Patentblatt 89/38**

(45) Bekanntmachung des Hinweises auf die
Patenterteilung :
**30.09.92 Patentblatt 92/40**

(84) Benannte Vertragsstaaten :
**DE ES FR GB IT NL**

(56) Entgegenhaltungen :
**DE-U- 1 972 753**
**DE-U- 6 914 521**
**US-A- 4 589 373**

(73) Patentinhaber : **LUBING MASCHINENFABRIK
LUDWIG BENING GmbH & Co. KG
Rechterner Strasse 18/20
W-2847 Barnstorf (DE)**

(72) Erfinder : **Schumacher, Egon
Landeshuterstrasse 6
W-2847 Barnstorf (DE)**

(74) Vertreter : **Möller, Friedrich, Dipl.-Ing. et al
Meissner, Bolte & Partner Patentanwälte
Hollerallee 73
W-2800 Bremen 1 (DE)**

## Beschreibung

Die Erfindung betrifft ein Tränkeventil für Kleintiere, insbesondere Hühner, gemäß dem Oberbegriff des Anspruchs 1 (DE-U-1 972 753).

Die hier angesprochenen Tränkeventile werden üblicherweise bei der Massentierhaltung, vorzugsweise von Kleintieren, wie beispielsweise Küken oder Hühnern, eingesetzt. Die Tränkeventile ermöglichen es den Kleintieren, ihren Wasserbedarf selbsttätig zu decken. Dazu öffnen die Kleintiere das Tränkeventil durch Bewegung der darin angeordneten Ventilanordnung vom Betätigungsende desselben aus. Nach ausreichender Wasserversorgung schließt das Tränkeventil automatisch, sobald das Kleintier den Kontakt zum Betätigungsende der Ventilanordnung aufhebt.

Bekannte Tränkeventile dieser Art verfügen über eine Ventilanordnung mit einem axial im Gehäuse gelagerten Ventilstift. Dieser muß zum Öffnen des Tränkeventils durch das Kleintier hochbewegt werden. Es hat sich gezeigt, daß diese Öffnungsbewegung des Tränkeventils insbesondere bei Küken, die mit ihrem Schnabel das Betätigungsende bewegen müssen, ungünstig ist. Das wirkt sich vor allem in der Anlernphase aus, weil neu mit derartigen Tränkeventilen konfrontierte Küken nicht sofort versuchen, den Ventilstift hochzudrücken; vielmehr diesen zunächst von der Seite her berühren.

Weiterhin hat sich bei bekannten Tränkeventilen dieser Art gezeigt, daß der Ventilsitz der Ventilanordnung so ausgebildet ist, daß zum Öffnen des Tränkeventils eine erhebliche Betätigungskraft von den Tieren aufgebracht werden muß. Dies gilt vor allem für üblicherweise ein aus einem elastischen Material (Gummi) hergestelltes Dichtorgan aufweisende Ventilanordnungen. Diese wirken sich hemmend auf eine Öffnungsbewegung aus. Darüber hinaus haben beispielsweise aus Gummi hergestellte Dichtorgane den Nachteil, daß diese mit der Zeit porös werden und eine zuverlässige Dichtung nicht mehr gewährleisten. Auch ermöglichen aus Gummi hergestellte Dichtorgane kein zuverlässiges Schließen des Tränkeventils mehr, wenn das zugeführte Wasser feine Feststoffpartikel enthält, was an sich üblich ist. Diese setzen sich leicht an den aus Gummi hergestellten Dichtungsorganen fest mit der Folge, daß das Tränkeventil sich nicht mehr vollständig selbsttätig schließt.

Hiervon ausgehend liegt der Erfindung die Aufgabe zugrunde, ein leicht und einfach zu betätigendes, zuverlässig schließendes Tränkeventil zu schaffen.

Zur Lösung dieser Aufgabe weist das erfindungsgemäße Tränkeventil die Merkmale des Anspruchs 1 auf. Durch die besondere Ausbildung des Ventilsitzes einerseits und der Dichtfläche andererseits wird sichergestellt, daß das Tränkeventil leicht zu betätigen ist und auch nach längerer Gebrauchsdauer zuverlässig schließt, und zwar auch dann, wenn das das Tränkeventil durchfließende Wasser Verunreinigungen in Form feiner Festkörper aufweisen sollte. Die erfindungsgemäß gerundete Ausbildung des Ventilsitzes verringert einen Verschleiß sowohl des Ventilsitzes als auch der kegelstumpfförmigen Dichtfläche.

Weiterhin wird durch den kegelstumpfförmigen Übergang an der Ventilanordnung und dem damit korrespondierenden gerundeten Ventilsitz im Gehäuse eine linienförmige, kreisrunde (Dicht-)Anlage der Ventilanordnung am Gehäuse geschaffen. Dabei ermöglicht die Rundung des Ventilsitzes ein leichtes Verschwenken des Ventilstiftes der Ventilanordnung im Gehäuse bei gleichzeitiger Öffnung des Ventils, indem die kegelstumpfförmige Ventilfläche bereichsweise außer Kontakt zum gerundeten Ventilsitz gelangt, derart, daß die Ventilfläche nur noch etwa punktförmig am Ventilsitz anliegt, wobei ein Flüssigkeitsaustritt aus dem Tränkeventil geschaffen wird.

Bei einer bevorzugten Ausführungsform des erfindungsgemäßen Tränkeventils ist der Ventilstift schwenkbar im Gehäuse gelagert, wodurch die Kleintiere das Tränkeventil durch seitliche Krafteinwirkung auf das Betätigungsende des Ventilstiftes quasi "spielend" betätigen können. Dadurch erübrigt sich nicht nur die Anlernphase, sondern es können auch kleine und schwache Tiere (Küken) problemlos das Tränkeventil öffnen. Darüber hinaus ist durch diese Lagerung des Ventilstiftes im Gehäuse auch gewährleistet, daß - wie üblich - das Tränkeventil von größeren Tieren durch Aufwärtsbewegung des Ventilstiftes geöffnet werden kann zur Abgabe größerer Wassermengen.

Zweckmäßigerweise ist der Ventilstift im Gehäuse in beliebige Richtungen schwenkbar. Dadurch können die Kleintiere aus jeder Relativposition zum Tränkeventil einen Wasserausfluß herbeiführen. In diesem Zusammenhang hat sich überraschend gezeigt, daß mit etwa 5,5 mm aus dem Gehäuse herausragendem Betätigungsende des Ventilstiftes die Tiere das austretende Wasser nahezu vollständig aufnehmen können, so daß praktisch kein Wasser ungenutzt in die Streu abfließt.

Bei einer vorteilhaften Ausführungsform des erfindungsgemäßen Tränkeventils ist ein eine Rückstellbewegung auf den Ventilstift ausübendes Rückstellorgan mit einem Vorabdichtmittel zu versehen. Im einfachsten Falle wird dieses durch eine Durchmesseraufweitung am oberen Ende eines das Rückstellorgan bildenden Kolbens geschaffen, wobei der Übergang zwischen dem größeren Durchmesser des oberen Endes des Kolbens zum unteren Abschnitt (dünneren Durchmessers) kegelstumpfförmig ausgebildet ist. Dieser kegelstumpfförmige Übergang bildet ein am oberen Rand der Bohrung im Gehäuse anliegendes Dichtorgan zur Vorabdichtung des Tränkeventils bei zusätzlich noch vorhandener Hauptdichtung zwischen dem Ventilstift und dem Gehäuse. Hierdurch wird eine auch bei längerem Gebrauch des Tränkeventils zuverlässige Dichtung gewährleistet und darüber hinaus eine portionsweise Wasserabgabe an die Tiere bei der Betätigung des Ventilstiftes möglich, indem bei jeder Betätigung nur das Wasservolumen im Bereich zwischen der Vorabdichtung und der Hauptabdichtung aus dem Tränkeventil herausströmen kann.

Vier bevorzugte Ausführungsbeispiele eines erfindungsgemäßen Tränkeventils werden nachfolgend anhand der Zeichnung näher erläutert. In dieser zeigen:

Fig. 1 einen Querschnitt durch ein erstes Ausführungsbeispiel des in eine Wasserversorgungsleitung eingeschraubten Tränkeventils in einem vergrößerten Maßstab,

Fig. 2 einen Querschnitt durch ein zweites Ausführungsbeispiel des Tränkeventils in einer Ansicht gemäß der Fig. 1,

Fig. 3 einen Querschnitt durch ein drittes Ausführungsbeispiel des Tränkeventils in einem vergrößerten Maßstab, und

Fig. 4 ein viertes Ausführungsbeispiel des Tränkeventils in einer Ansicht gemäß den Fig. 1 bzw. 2.

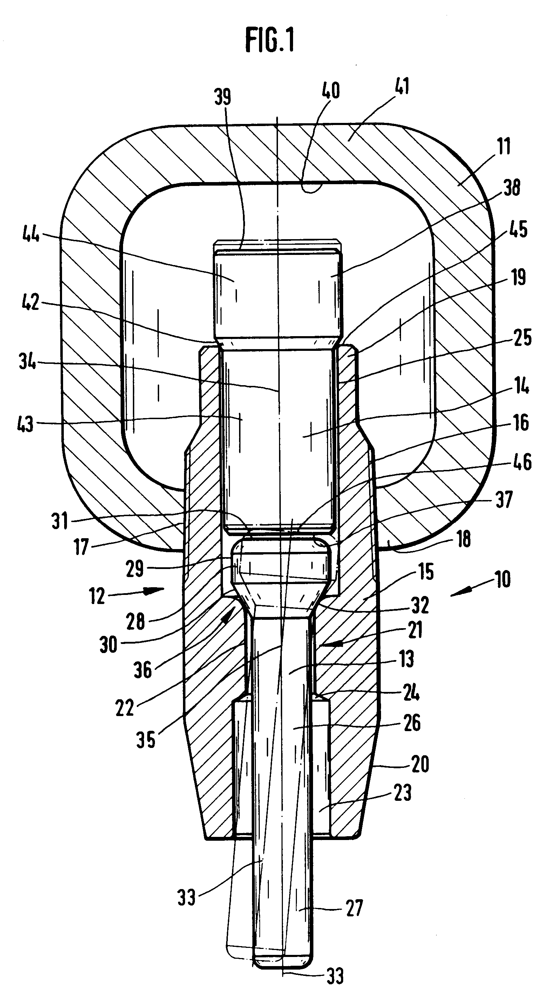

Die gezeigten Tränkeventile 10 sind insbesondere zum Einsatz in Mastbatterien von Junghühnern, nämlich Broilern, vorgesehen. Zu diesem Zweck sind eine Vielzahl derartiger Tränkeventile 10 mit Abstand voneinander in einer Wasserversorgungsleitung 11 eingeschraubt. In den Fig. 1, 2 und 4 ist eine Wasserversorgungsleitung 11 aus einem etwa viereckigen Rohr mit gerundeten Ecken dargestellt. Das Tränkeventil kann aber auch im Zusammenhang mit andersartig ausgebildeten Wasserversorgungsleitungen zum Einsatz kommen oder als einzelnes Tränkeventil 10 in die Stirnseite eines wasserführenden Rohres bzw. Schlauches eingesetzt sein. Das Tränkeventil 10 nach dem ersten Ausführungsbeispiel der Erfindung setzt sich zusammen aus einer Ventilanordnung 12, die hier aus einem Ventilstift 13 sowie einem als Rückstellorgan dienenden Kolben 14 besteht, und einem zur teilweisen Aufnahme der Ventilanordnung 12 dienenden Gehäuse 15. Sowohl das Gehäuse 15 als auch die Ventilanordnung 12, nämlich der Ventilstift 13 und der Kolben 14, sind aus einem vorzugsweise nichtrostenden, metallischen Material hergestellt.

Das hier gezeigte Gehäuse 15 ist im wesentlichen zylindrisch ausgebildet. Die gegenüberliegenden Endbereiche des Gehäuses 15 sind verjüngt ausgebildet. In einem (zylindrischen) Mittelbereich ist das Gehäuse 15 mit einem Außengewinde 16 versehen. Mit diesem Außengewinde 16 ist das Gehäuse 15 in eine korrespondierende Gewindebohrung 17 im unteren Wandabschnitt 18 der Wasserversorgungsleitung 11 eingeschraubt. Dadurch ragt das Gehäuse 15 mit einem oberen Endbereich 19 in das Innere der Wasserversorgungsleitung 11 hinein, während mit einem unteren Endbereich 20 das Gehäuse 15 gegenüber dem unteren Wandabschnitt 18 nach außen aus der Wasserversorgungsleitung 11 herausragt.

Zur Sicherung des Tränkeventils 10 gegen Herausdrehen aus der Wasserversorgungsleitung 11 kann von der Außenseite her eine nicht gezeigte Kontermutter auf dem Außengewinde 16 des Gehäuses 15 angeordnet sein.

Im Inneren weist das Gehäuse 15 eine durchgehende Bohrung 21 auf. Diese besteht hier aus drei aufeinander folgenden (zylindrischen) Abschnitten, die sich im wesentlichen durch ihre Durchmesser unterscheiden (Fig. 1). Ein mittlerer Bereich der Bohrung 21 ist als Halteabschnitt 22 ausgebildet. Dieser verfügt gegenüber den anderen Bereichen der Bohrung 21 über den geringsten Durchmesser zur Bildung einer Auflage sowie einer seitlichen Halterung des Ventilstiftes 13. Im unteren Endbereich 20 des Gehäuses 15 ist die Bohrung 24 mit einer (zylindrischen) Aufweitung 23 versehen, die von unten her im Halteabschnitt 22 mündet, und zwar über einen kegelstumpfförmigen Übergang 24. Vom oberen Endbereich 19 des Gehäuses (15) ausgehend ist die Bohrung 21 mit einer Aufweitung 25 versehen. Der Durchmesser der Aufweitung 25 ist im vorliegenden Ausführungsbeispiel etwas größer als derjenige der Aufweitung 23 am unteren Endbereich 20 des Gehäuses 15.

Der Ventilstift 13 weist einen länglichen, zylindrischen Ventilschaft 26 auf, der durch den Halteabschnitt 22 und die (untere) Aufweitung 23 hindurch mit einem unteren Endbereich, nämlich einem Betätigungsende 27, unten aus dem Gehäuse 15 herausragt, also gegenüber dem unteren Endbereich 20 desselben vorsteht, und zwar nach einem wesentlichen Merkmal der Erfindung um 5,5 mm. An einem dem Betätigungsende 27 gegenüberliegenden (oberen) Ende weist der Ventilstift 13 einen Ventilkopf 28 aus einem zylindrischen Kopfende 29 mit einem gegenüber dem Ventilschaft 26 größeren Durchmesser und einem sich daran anschließenden, kegelstumpfförmigen Übergang 30 zum Ventilschaft 26 auf. Eine Oberseite 31 des Ventilkopfes 28 ist ebenflächig ausgebildet und mit einem umlaufenden, abgerundeten Rand 32 versehen.

Der in vorstehender Weise ausgebildete Ventilstift 13 ist 1 in besonderer Weise im Gehäuse 15 gelagert, nämlich rundherum im Gehäuse 15 schwenkbar (Fig. 1).

Darüber hinaus läßt sich im vorliegenden Ausführungsbeispiel der Ventilstift 13 noch im Gehäuse 15 auf- und abbewegen. Die Verschwenkung des Ventilstiftes 13 gegenüber dem Gehäuse 15 erfolgt derart, daß eine Längsmittelachse 33 des Ventilstifts gegenüber einer Längsachse 34 des Gehäuses 15 bzw. der Bohrung 21 verschwenkbar ist, und zwar um einen im vorliegenden Ausführungsbeispiel etwa mittig im Halteabschnitt 22 bzw. kurz unterhalb des Ventilkopfes 28 des Ventilstiftes 13 liegenden Schwenkpunkt 35. Hierdurch kann der Ventilstift 13 von beliebigen Seiten des aus dem Gehäuse 15 herausragenden Betätigungsendes 27 aus verschwenkt werden. Es kann so die Längsmittelachse 33 des Ventilstiftes 13 auf einer kegelförmigen Hüllkurve um die Längsachse 34 des Gehäuses 15 bewegt werden, wobei die Spitze der kegelförmigen Hüllkurve auf dem Schwenkpunkt 35 liegt.

Ermöglicht wird die Verschwenkbarkeit des Ventilstiftes 13 im Gehäuse 15 auf zweierlei Weise: Erstens ermöglicht der im Vergleich zum Durchmesser des Ventilschaftes 26 mit geringfügig größerem Durchmesser versehene Halteabschnitt 22 im an den Schwenkpunkt 35 angrenzenden Bereich in Verbindung mit der (unteren) Aufweitung 23 im weiter vom Schwenkpunkt 35 entfernt liegenden Bereich der Bohrung 21 ein ringsherum freies Verschwenken des Ventilstiftes 13 im Gehäuse 15 bis zum strichpunktiert in der Fig. 1 dargestellten Maximalausschlag. Zweitens ist an der zur (oberen) Aufweitung 25 gerichteten Seite der Halteabschnitt 22 mit einem erfindungsgemäß besonders ausgebildeten Ventilsitz 36 versehen. Dieser ist nämlich kreisbogenförmig gerundet. Dadurch entsteht eine kreisförmig umlaufende, runde Kante am Übergang des oberen Endes des Halteabschnittes 22 zur Aufweitung 25. Als korrespondierende Ventilfläche zum Ventilsitz 36 dient der kegelstumpfförmige Übergang 30 des Ventilstiftes 13.

Die besondere Ausbildung des Ventilsitzes 36 des Gehäuses 15 einerseits und der Ventilfläche am Ventilstift 13 andererseits stellt sicher, daß trotz der metallischen Ausbildung des Tränkeventils dieses zuverlässig selbsttätig schließt. Die umlaufende Rundung des Ventilsitzes 36 gewährleistet dabei zusammen mit dem daran anliegenden kegelstumpfförmigen Übergang 30 am Ventilstift 13 eine besonders leichte Betätigung des Tränkeventils 10 und das gewünschte zuverlässige Schließen desselben.

Die vorstehend beschriebene Ausbildung des Ventilsitzes 36 einerseits und der Ventilfläche am kegelstumpfförmigen Übergang 30 andererseits führt auch dazu, daß der Ventilstift 13 in seiner senkrechten (Ruhe-)Lage, also bei Deckung der Längsmittelachse 33 des Ventilstiftes 13 mit der Längsachse 34 des Gehäuses 15, eine dichtende Anlage entlang einer Kreislinie am Gehäuse 15 beibehält. Diese Stellung ist in der Fig. 1 dargestellt.

Nach dem Verschwenken des Ventilstiftes 13 in eine in der Fig. 1 strichpunktiert dargestellten Lage (was in beliebige Richtung erfolgen kann) liegt die Längsmittelachse 33 des Ventilstiftes 13 unter einem spitzen Winkel zu Längsachse 34 des Gehäuses 15. Durch die Anordnung des Schwenkpunktes 35 etwas unterhalb des Kopfendes 29 des Ventilstiftes 13, wandert dieser ebenfalls bei einer Verschwenkung des Betätigungsendes 27 in bezug auf die Längsachse 34 des Gehäuses 15 um einen spitzen Winkel aus. Gleichzeitig erfolgt ein Anheben des Ventilstiftes 13. Der Anhebeweg beträgt dabei vorzugsweise 0,4 bis 0,5 mm. Die kegelstumpfförmige Ventilfläche des Übergangs 30 am Ventilstift 13 verändert sich hierdurch ebenfalls, wie aus der strichpunktierten Darstellung in der Fig. 1 ersichtlich ist. Die Ventilfläche verfügt dann nur noch über eine etwa punktförmige Anlage am Ventilsitz 36, wodurch an den diesem Anlagepunkt angrenzenden Bereichen zwischen der Ventilfläche und dem Ventilsitz 36 eine Öffnung zum Wasserdurchlaß entsteht. Hier durchströmendes Wasser gelangt dann über den Drosselabschnitt 27 und die Aufweitung 23 aus dem Gehäuse 15 heraus zum das Tränkeventil 10 betätigenden Tier. Auch kann das hier gezeigte Tränkeventil - wie bei bekannten Tränkeventilen dieser Art - durch eine ausschließliche vertikale Aufwärtsbewegung oder durch eine kombinierte Aufwärts- und Seitwärtsbewegung des Ventilstifts 13 geöffnet werden.

Zum Schließen des Tränkeventils 10 kann der verschwenkte Ventilstift 13 durch sein Eigengewicht in seine Ausgangslage, in der seine Längsmittelachse 33 mit der Längsachse 34 des Gehäuses 15 zur Deckung kommt, zurückkehren. Vielfach ist diese Rückstellkraft für ein sicheres Schließen des Tränkeventils 10 noch nicht ausreichend. Deshalb verfügt die Ventilanordnung 12 zusätzlich zum Ventilstift 13 noch über den Kolben 14. Dieser Kolben 14 ist mit Spiel auf- und abbewegbar im Gehäuse 15 gelagert, und zwar in der dem oberen Endbereich 19 des Gehäuses 15 zugeordneten Aufweitung 25. Der Durchmesser der Aufweitung 25 ist nur geringfügig größer als der des darin gelagerten (zylindrischen) Abschnitts des Kolbens 14. Dadurch entsteht hier eine über dem Ventilstift 13 sich befindende Drossel für den Wasserdurchfluß, die den Wasserausfluß aus dem Tränkeventil 10 in einfacher Weise zweckmäßig begrenzt.

Beim hier gezeigten Tränkeventil 10 (Fig. 1) verfügt der Kolben 14 über ein Vorabdichtmittel. Dieses wird gebildet durch einen kegelstumpfförmigen Sitz 42 zwischen zwei unterschiedlich große Durchmesser aufweisenden, zylindrischen Abschnitte des Kolbens 14, nämlich einen (längeren) unteren Zylinderabschnitt 43 und einen oberen Zylinderabschnitt 44 größeren Durchmessers. Der kegelstumpfförmige Sitz 42 liegt bei geschlossenem Tränkeventil 10 an dem oberen Ende des Gehäuses 15, nämlich einer oberen Kante 45 der oberen Aufweitung 25 im Gehäuse 15, an, die damit einen Ventilsitz für das Vorabdichtmittel bildet. Damit sich der kegelstumpfförmige Sitz 42 des Kolbens 14 ungehindert auf der oberen Kante 45 der oberen Aufweitung 25 im Gehäuse 15, also dem Ventilsitz, abstützen kann, ist der untere Zylinderabschnitt 43 des Kolbens 14 derart in seiner Länge bemessen, daß bei geschlossenem Tränkeventil 10 ein Spalt 46, der vorzugsweise um etwa 0,2 mm beträgt, zwischen einer unteren (ebenen) Stirnseite 37 des Kolbens 14 und der ebenen Oberseite 31 des Ventilstiftes 13 entsteht.

Durch die vorstehend beschriebene Ausbildung des Kolbens 14 erfolgt eine doppelte Abdichtung des Tränkeventils 10 dieses Ausführungsbeispiels, nämlich im Bereich des kegelstumpfförmigen Sitzes 42 des Kolbens 14 (Vorabdichtung) und des kegelstumpfförmigen Übergangs 30 am Ventilstift 13 (Hauptabdichtung). Weiterhin kann bei geringfügiger Öffnungsbewegung des Ventilstiftes 13 nur die Hauptabdichtung geöffnet werden, wodurch nur eine sich im Bereich zwischen der Haupt- und Vorabdichtung befindliche Wasserportion aus dem Tränkeventil 10 herausfließt.

Schließlich übt der Kolben 14 eine Rückstellkraft auf den Ventilstift 13 aus, indem er - wie deutlich aus der Fig. 1 ersichtlich - im verschwenkten Zustand des Ventilstiftes 13, also bei geöffnetem Tränkeventil 10, aufwärtsbewegt wird, und nach dem Loslassen des Ventilstiftes 13 durch das Tier infolge des Eigengewichts des Kolbens 14 auf die noch schräggerichtete Oberseite 31 des Kopfendes 29 des Ventilstiftes 13 ein Rükstellmoment ausgeübt wird, bis der Kolben 14 mit seinem kegelstumpfförmigen Sitz 42 auf der oberen Kante 45 der oberen Aufweitung 25 aufliegt.

Der Kolben 14 ragt im vorliegenden Ausführungsbeispiel (Fig. 1) mit seinem oberen Zylinderabschnitt 44 oben aus dem Gehäuse 15 heraus, so daß der obere Zylinderabschnitt 44 sich im Inneren der Wasserversorgungsleitung 11 befindet. Dabei ist die Länge des oberen Zylinderabschnitts 44 derart bemessen, daß eine obere Stirnseite 39 desselben einen Abstand zur Innenseite 40 eines oberen Wandabschnitts 41 der Wasserversorgungsleitung 11 aufweist, der erheblich geringer als die Länge des im Gehäuse 15 gelagerten unteren Zylinderabschnitts 43 des Kolbens 14 ist. Hierdurch wird ein Herausfallen des fliegend auf- und abbewegbar gelagerten Kolbens 14 aus dem Gehäuse 15 einfach, aber wirksam verhindert.

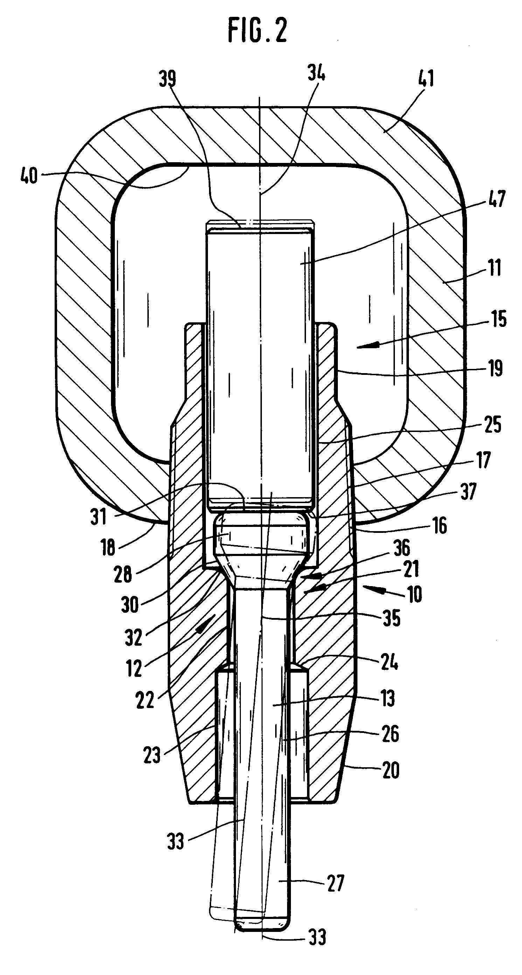

Das Tränkeventil gemäß dem zweiten Ausführungsbeispiel der Erfindung (Fig. 2) unterscheidet sich von dem vorstehend beschriebenen Tränkeventil (Fig. 1) dadurch, daß der Kolben 47 durchgehend zylindrisch mit einem gleichbleibenden Durchmesser ausgebildet ist, also kein Vorabdichtmittel aufweist. Der Kolben 47 liegt dadurch auf dem Ventilkopf 28 des Ventilstiftes 13 ständig auf. Dadurch liegt die (ebene) untere Stirnseite 37 des durchgehend zylindrisch ausgebildeten Kolbens 47 auf der ebenfalls ebenen Oberseite 31 des Ventilkopfes 28 auch dann auf, wenn dieser geschlossen ist, also die Längsmittelachse 33 des Ventilstiftes 13 mit der Längsachse 34 des Gehäuses 15 zusammenfällt.

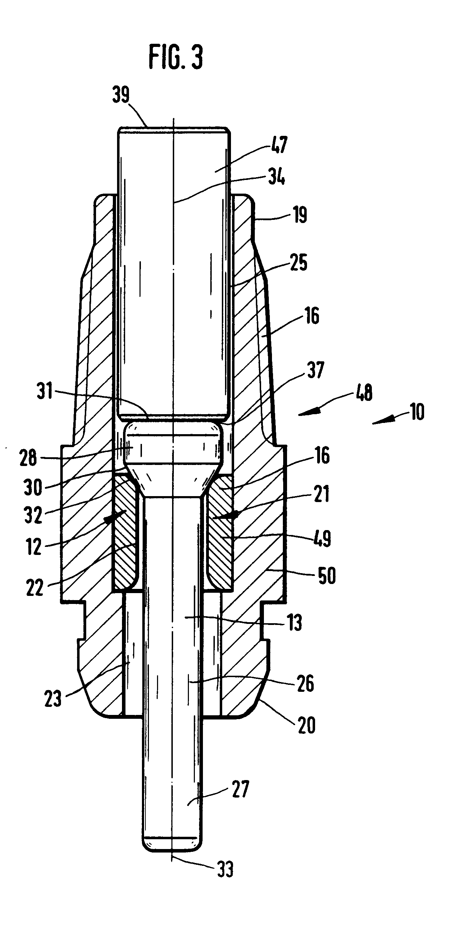

Das dritte Ausführungsbeispiel des Tränkeventils 10 (Fig. 3) verfügt über eine Ventilanordnung 12 aus dem Ventilstift 13 und dem durchgehend zylindrisch ausgebildeten Kolben 47. Hier ist das Gehäuse 48 in besonderer Weise, nämlich zweiteilig, ausgebildet. Das Gehäuse 48 verfügt dazu über einen aus einem metallischen Material hergestellten Dichtring 49, der am oberen Ende den umlaufend bogenförmig ausgebildeten Rand 32 zur Bildung des Ventilsitzes 36 analog zu den beiden vorstehend beschrieben Ausführungsbeispielen des Tränkeventils 10 aufweist.

Eingesetzt ist der metallische Dichtring 49 im vorliegenden Ausführungsbeispiel durch einen Preßsitz in einen äußeren Gehäusekörper 50 des Gehäuses 48. Aufgrund der Verwendung eines metallischen Materials für den Dichtring 49 kann der Gehäusekörper 50 aus nichtmetallischem Material hergestellt sein, beispielsweise Kunststoff. Die Verwendung von Kunststoff für den Gehäusekörper 50 ermöglicht es, diesen aus einem farbigen Material herzustellen, das die Tiere zur Benutzung des Tränkeventils 10 anregt.

In der Funktionsweise entspricht das Tränkeventil 10 dieses (dritten) Ausführungsbeispiels dem Tränkeventil 10 des zweiten Ausführungsbeispiels (Fig. 2).

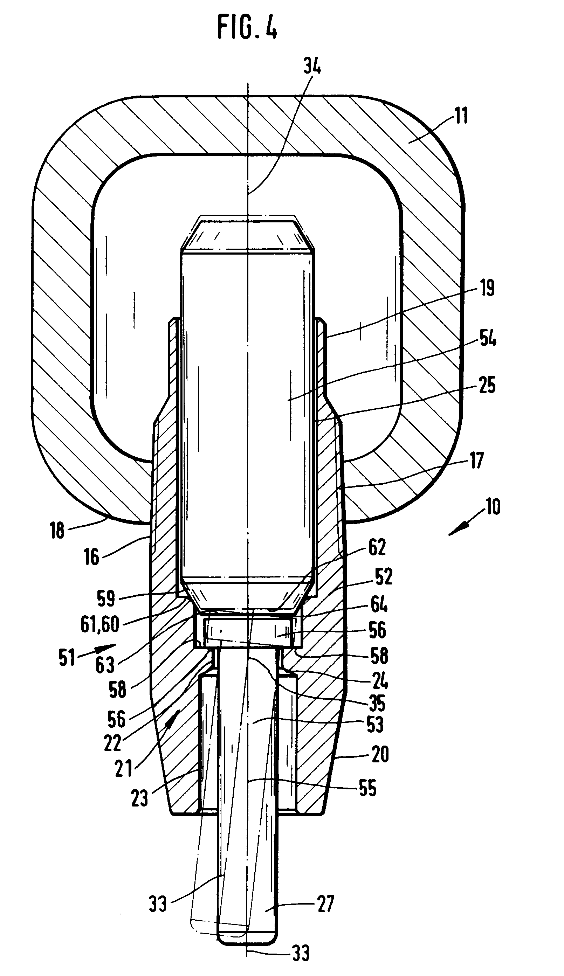

Schließlich betrifft das vierte Ausführungsbeispiel (Fig. 4) ein Tränkeventil 10 mit einer besonders ausgebildeten Ventilanordnung 51. Diese ist wiederum in einem einteiligen Gehäuse 52 aus vollständig metallischem Material gelagert.

Die Ventilanordnung 51 dieses Ausführungsbeispiels setzt sich ebenfalls aus einem Ventilstift 53 und einem Kolben 54 zusammen, die beide aus metallischem Material hergestellt sind. Der Ventilstift 53 verfügt über einen zylindrischen Ventilschaft 55, an dessen oberen Ende ein zylindrischer Ventilkopf 56 mit deutlich größerem Durchmesser gegenüber dem Ventilschaft 55 angeordnet ist. Mit einer ebenen, kreisringförmigen Unterkante 57 des Ventilkopfes 56 stützt sich der Ventilschaft 55 auf einem ebenen, ebenfalls kreisringförmig ausgebildeten Ventilsitz 58 im Gehäuse 52 ab. Hierdurch erfolgt bei geschlossenem Ventilstift 53, also mit sich deckender oder parallel zueinander verlaufender Längsmittelachse 33 des Ventilstiftes 53 zur Längsachse 34 des Gehäuses 52, eine erste Abdichtung des Tränkeventils 10.

Eine zweite (Haupt-)Abdichtung erfolgt bei diesem Tränkeventil 10 durch eine weitere Abdichtung des Kolbens 54 gegenüber dem Gehäuse 52. Diese Dichtanordnung ist analog zur Dichtanordnung des Ventilstiftes 13 der vorstehend beschriebenen Ausführungsbeispiele des Tränkeventils 10 am entsprechenden Gehäuse 15 ausgebildet. Dazu verfügt der untere Endbereich des Kolbens 54 über einen kegelstumpfförmigen Sitz 59, der bei geschlossenem Tränkeventil 10 Anlage erhält an einen mit einem umlaufenden, bogenförmig ausgebildeten Rand 60 versehen Ventilsitz 61.

Die Höhe des zylindrischen Ventilkopfes 56 am Ventilstift 53 ist hier wiederum derart bemessen, daß zwischen der ebenen Unterseite 62 des Kolbens 54 und einer ebenfalls ebenen Oberseite 63 des Ventilkopfes 56 ein Spalt 64 entsteht. Die Spaltbreite beträgt hier vorzugsweise etwa 0,1 mm. Dadurch ist gewährleistet, daß sowohl der Ventilstift 53 als auch der Kolben 54 auf den entsprechenden Ventilsitzen 58 bzw. 61 unabhängig voneinander dichtend zur Anlage kommen. Eine Rückstellbewegung übt der Kolben 54 demnach auf den Ventilstift 53 (wie beim Ausführungsbeispiel der Fig. 1) nur bei entsprechend verkipptem bzw. angehobenem Ventilstift 53 aus. Demzufolge übt der Kolben 54 zum Schließen des Tränkeventils 10 nur so weit eine Rückstellbewegung auf den Ventilstift 53, bis ersterer auf seinem umlaufend gerundeten Ventilsitz 61 Anlage erhält. Die übrige Rückstellung (über dem Bereich des schmalen Spalts 64) des Ventilstiftes 53 erfolgt selbsttätig durch sein Eigengewicht, wobei aufgrund der ebenen Ausbildung sowohl des Ventilsitzes 58 für den Ventilstift 53 und der Unterkante 57 seines Ventilkopfes 56 eine sichere Positionierung des Ventilstiftes 53 in seiner Schließstellung gewährleistet ist.

## Patentansprüche

1. Tränkeventil für Kleintiere, insbesondere Hühner, mit einem an ein Wasserversorgungsorgan anschließbaren Gehäuse (15, 48, 52), einem Ventilstift (13, 53) und einem Kolben (14, 47, 54), wobei der Ventilstift (13, 53) sowie der Kolben (14, 47, 54) im Gehäuse (15, 48, 52) gelagert sind, wenigstens der Ventilstift (13, 53) oder der Kolben (14, 47, 54) eine kegelstumpfförmige Dichtfläche aus einem metallischen Material aufweisen, und der Ventilstift (13, 53) mit einem unten aus dem Gehäuse (15, 48, 52) herausragenden Betätigungsende (27) versehen ist, **dadurch gekennzeichnet,** daß der Kegelstumpfförmigen Dichtfläche am Gehäuse ein umlaufender, im Querschnitt kreisbogenförmiger Ventilsitz (36) aus einem metallischen Material zugeordnet ist zur Bildung einer linienförmig en, umlaufenden, dichtenden Anlage für den Ventilstift (13, 53) oder den Kolben (14, 47, 54).

2. Tränkeventil nach Anspruch 3, dadurch gekennzeichnet, daß der umlaufend bogenförmig ausgebildete Ventilsitz (36) am Gehäuse (15) bzw. an einem in einem Gehäusekörper (50) eingesetzten Dichtring (49) im Bereich des Zusammentreffens zweier unterschiedlich großer Gehäusebohrungen (Halteabschnitt 22 und obere Aufweitung 25) gebildet ist.

3. Tränkeventil nach Anspruch 1 oder 2, dadurch gekennzeichnet, daß der Ventilstift (13, 53) um seine Längsmittelachse (33) schwenkbar im Gehäuse (15, 48, 52) gelagert ist.

4. Tränkeventil nach Anspruch 3, dadurch gekennzeichnet, daß der Ventilstift (13, 53) um einen dem Betätigungsende (11-7) gegenüberliegenden oberen Endbereich zugeordneten Schwenkpunkt (35) in beliebiger Richtung um seine Längsmittelachse (33) im Gehäuse (15, 48, 52) schwenkbar ist.

5. Tränkeventil nach Anspruch 3 oder 4, dadurch gekennzeichnet, daß eine zur Aufnahme des (kreisrunden) Ventilstiftes (13, 53) dienende Bohrung (21) im Gehäuse (15, 48, 52) ausgehend vom zum Betätigungsende (27) des Ventilstiftes (13, 53) gerichteten unteren Endbereich (20) eine (zylindrische) Aufweitung (23) aufweist zur Ermöglichung bzw. Begrenzung des Kippwegs des Ventilschaftes (26, 55) des Ventilstiftes (13, 53) im Gehäuse (15, 48, 52).

6. Tränkeventil nach einem oder mehreren der Ansprüche 1 bis 5, dadurch gekennzeichnet, daß der über dem Ventilstift (13, 53) angeordnete Kolben (14, 47, 54) auf- und abbewegbar im Gehäuse (15, 48, 52) gelagert ist.

7. Tränkeventil nach Anspruch 6, dadurch gekennzeichnet, daß der Kolben (14, 47, 54) wenigstens über einen Teilbereich der Schließbewegung des Ventilstiftes (13, 53) auf einem Ventilkopf (28, 56) desselben aufliegt, derart, daß der Kolben (14, 47, 54) durch sein Eigengewicht den gegenüber der Längsachse (34) des Gehäuses (15, 48, 52) verschwenkten Ventilstift (13, 53) mindestens teilweise in seine Dichtposition, in der die Längsmittelachse (33) des Ventilstiftes (13, 53) mit der Längsachse (34) des Gehäuses (15, 48, 52) in etwa zur Deckung gelangt, zurückbewegt.

8. Tränkeventil nach Anspruch 6 oder 7, dadurch gekennzeichnet, daß der Kolben (14, 54) ein Vorabdichtmittel aufweist.

9. Tränkeventil nach Anspruch 8, dadurch gekennzeichnet, daß das Vorabdichtmittel durch einen kegelstumpfförmigen Dichtsitz (42) an einer Durchmesseraufweitung des Kolbens (14) im Bereich seines oberen Endabschnitts (38) gebildet ist, der an einer umlaufenden, kreisförmigen oberen Kante (45) der Bohrung (21) bzw. einer oberen Aufweitung (25) derselben im Gehäuse (15) wenigstens teilweise dichtend anliegt.

10. Tränkeventil nach Anspruch 9, dadurch gekennzeichnet, daß ein unterer Zylinderabschnitt (43) des Kolbens (14) derart bemessen ist, daß in geschlossener Position des Kolbens (14) und des Ventilstiftes (13) zwischen den einanderzugerichteten Enden derselben ein Spalt (46) entsteht, insbesondere mit einer Breite von etwa 0,2 mm.

11. Tränkeventil nach einem oder mehreren der Ansprüche 8 bis 10, dadurch gekennzeichnet, daß der Kolben (14, 47, 54) teilweise oben aus dem Gehäuse (15, 48, 52) herausragend in einer entsprechenden Gehäusebohrung (Aufweitung 25) gelagert ist.

12. Tränkeventil nach einem oder mehreren der Ansprüche 8 bis 11, dadurch gekennzeichnet, daß die Länge des Kolbens (14, 47, 54) derart bemessen ist, daß er mit einem oberen Endabschnitt (38) aus dem Gehäuse (15, 48, 52) heraus in das Innere einer als Wasserversorgungsorgan dienenden Wasserversorgungsleitung (11) ragt, wobei der Abstand einer oberen Stirnseite (39) des Kolbens (14, 47, 54) zu einer darüberliegenden Innenseite (40) der Wasserversorgungsleitung (11) geringer ist als der übrige im Gehäuse (15, 48, 52) sich befindende (Längen-)Abschnitt des Kolbens (14, 47, 54).

13. Tränkeventil nach einem oder mehreren der Ansprüche 8 bis 12, dadurch gekennzeichnet, daß der Kolben (47) an seiner zum Ventilstift (13) gerichteten unteren Stirnseite (37) eben ausgebildet ist zur Bildung einer Anlagefläche für eine korrespondierend (eben) ausgebildete Oberseite (31) am Kopfende (29) des Ventilstiftes (13), derart, daß die untere Stirnseite (37) des Kolbens (47) in Dichtposition des Ventilstiftes (13) vollflächig an der Oberseite (31) desselben zur Anlage kommt.

## Claims

1. Drinking valve for small animals, in particular chickens, having a housing (15, 48, 52) which is connectable to a water supply mechanism, a valve pin (13, 53) and a piston (14, 47, 54), the valve pin (13, 53) and the piston (14, 47, 54) being mounted in the housing (15, 48, 52), at least the valve pin (13, 53) or the piston (14, 47, 54) exhibiting a frustoconical sealing surface made from a metallic material, and the valve pin (13, 53) being provided with an actuating end (27) protruding out of the bottom of the housing (15, 48, 52), characterised in that a circumferential valve seat (36), arc-shaped in cross-section and made from a metallic material, is assigned to the frustoconical sealing surface on the housing to form a linear, circumferential, sealing contact surface for the valve pin (13, 53) or the piston (14, 47, 54).

2. Drinking valve according to Claim 1, characterised in that the circumferentially arc-shape configured valve seat (36) on the housing (15) or on a sealing ring (49) inserted in a housing element (50) is formed in the area of the junction of two different-sized housing bores (holding section 22 and upper widening 25).

3. Drinking valve according to Claim 1 or 2, characterised in that the valve pin (13, 53) is mounted in the housing (15, 48, 52) pivotably about its longitudinal centre-axis (33).

4. Drinking valve according to Claim 3, characterised in that the valve pin (13, 53) can be pivoted in the housing (15, 48, 52), about a fulcrum (35) assigned to the upper end area opposite the actuating end (27), in an optional direction about its longitudinal centre-axis (33).

5. Drinking valve according to Claim 3 or 4, characterised in that a bore (21) in the housing (15, 48, 52), which bore serves to receive the (circular) valve pin (13, 53) and originates from the lower end area (20) directed towards the actuating end (27) of the valve pin (13, 53), exhibits a (cylindrical) widening (23) to allow or limit the tilting path of the valve stem (26, 55) of the valve pin (13, 53) in the housing (15, 48, 52).

6. Drinking valve according to one or more of Claims 1 to 5, characterised in that the piston (14, 47, 54) disposed above the valve pin (13, 53) is mounted such that it can be moved up and down in the housing (15, 48, 52).

7. Drinking valve according to Claim 6, characterised in that, at least over a part-area of the closing move-

7

ment of the valve pin (13, 53), the piston (14, 47, 54) bears down on a valve head (28, 56) of the said pin in such a way that the piston (14, 47, 54), by its own weight, moves the valve pin (13, 53) pivoted in relation to the longitudinal axis (34) of the housing (15, 48, 52) at least partly back into its sealing position, in which the longitudinal centre-axis (33) of the valve pin (13, 53) approximately coincides with the longitudinal axis (34) of the housing (15, 48, 52).

8. Drinking valve according to Claim 6 or 7, characterised in that the piston (14, 54) exhibits a pre-sealing means.

9. Drinking valve according to Claim 8, characterised in that the pre-sealing means is formed by a frustoconical sealing seat (42) on a diametral widening of the piston (14) in the area of its upper end section (38), which lies in contact in the housing (15), in an at least partially sealing manner, with a circumferential, circular, upper edge (45) of the bore (21) or an upper widening (25) of the said bore.

10. Drinking valve according to Claim 9 , characterised in that a lower cylindrical section (43) of the piston (14) is dimensioned such that, in the closed position of the piston (14) and of the valve pin (13), a gap (46), in particular having a width of around 0.2 mm, is formed between the mutually facing ends of the said piston and the said pin.

11. Drinking valve according to one or more of Claims 8 to 10, characterised in that the piston (14, 47, 54) is mounted, partially protruding out of the top of the housing (15, 48, 52), in a corresponding housing bore (widening 25).

12. Drinking valve according to one or more of Claims 8 to 11, characterised in that the length of the piston (14, 47, 54) is dimensioned such that it protrudes by an upper end section (38) out of the housing (15, 48, 52) into the interior of a water supply pipe (11) serving as a water supply mechanism, the distance of an upper end face (39) of the piston (14, 47, 54) from an overlying inner side (40) of the water supply pipe (11) being smaller than the other (longitudinal) section of the piston (14, 47, 54) located in the housing (15, 48, 52).

13. Drinking valve according to one or more of Claims 8 to 12, characterised in that the piston (47) is configured flatly on its lower end face (37) directed towards the valve pin (13) to form a contact surface for a correspondingly (flatly) configured top side (31) at the head end (29) of the valve pin (13), such that the lower end face (37) of the piston (47), in the sealing position of the valve pin (13), comes fully into contact, over its entire surface, with the top side (31) of the valve pin.

**Revendications**

1. Robinet d'abreuvement à soupape pour petits animaux, en particulier poules, comportant un corps (15, 48, 52) se montant sur un organe de distribution d'eau, une tige soupape (13, 53) et un piston (14, 47, 54), la tige soupape (13, 53) et le piston (14, 47, 54) étant montés dans le corps (15, 48, 52), au moins la tige soupape (13, 53) ou le piston (14, 47, 54) ayant une surface de portée tronconique en métal et la tige soupape (13, 53) étant pourvue d'une extrémité d'actionnement (27) dépassant en bas du corps (15, 48, 52), caractérisé par le fait qu'à la surface de portée tronconique est associé, sur le corps, un siège faisant le tour, à section en arc de cercle (36) en métal pour la formation d'un appui d'étanchéité linéaire faisant le tour pour la tige soupape (13, 53) ou le piston (14, 47, 54).

2. Robinet d'abreuvement à soupape selon la revendication 1, caractérisé par le fait que le siège faisant le tour à section en arc de cercle (36) prévu sur le corps (15) ou sur un joint annulaire d'étanchéité (49) monté dans un corps principal (50) du corps est formé dans la zone de rencontre de deux alésages de grandeur différente du corps (partie de retenue 22 et élargissement supérieur 25).

3. Robinet d'abreuvement à soupape selon l'une des revendications 1 et 2, caractérisé par le fait que la tige soupape (13, 53) est montée dans le corps (15, 48, 52) de façon que son axe longitudinal (33) puisse basculer.

4. Robinet d'abreuvement à soupape selon la revendication 3, caractérisé par le fait que l'axe longitudinal (33) de la tige soupape (13, 53) peut basculer dans une direction quelconque dans le corps (15, 48, 52) autour d'un point (35) de la partie d'extrémité supérieure opposée à l'extrémité d'actionnement (27).

5. Robinet d'abreuvement à soupape selon l'une des revendications 3 et 4, caractérisé par le fait qu'un alésage (21), fait dans le corps (15, 48, 52) pour recevoir la tige soupape (ronde) (13, 53), présente, à partir de la partie d'extrémité inférieure (20) dirigée vers l'extrémité d'actionnement (27) de la tige soupape (13, 53), un élargissement (cylindrique) (23) destiné à permettre ou limiter le basculement de la queue (26, 55) de la tige soupape (13, 53) dans le corps (15, 48, 52).

6. Robinet d'abreuvement à soupape selon une ou plusieurs des revendications 1 à 5, caractérisé par le fait que le piston (14, 47, 54), placé au-dessus de la tige soupape (13, 53), est monté dans le corps (15, 48, 52) de façon à pouvoir monter et descendre.

7. Robinet d'abreuvement à soupape selon la revendication 6, caractérisé par le fait que le piston (14, 47, 54), au moins pendant une partie du mouvement de fermeture de la tige soupape (13, 53), repose sur une tête (28, 56) de celle-ci de façon telle que, par son propre poids, il ramène au moins en partie dans sa position d'étanchéité la tige soupape (13, 53) basculée par rapport à l'axe longitudinal (34) du corps (15, 48, 52), position dans laquelle l'axe longitudinal (33) de la tige soupape (13, 53) coïncide à peu près avec l'axe longitudinal (34) du corps (15, 48, 52).

8. Robinet d'abreuvement à soupape selon l'une des revendications 6 et 7, caractérisé par le fait que le piston (14, 54) présente un moyen de pré-étanchéité.

9. Robinet d'abreuvement à soupape selon la revendication 8, caractérisé par le fait que le moyen de pré-étanchéité est formé par un siège tronconique (42) prévu sur un élargissement en diamètre du piston (14) dans la zone de la partie d'extrémité supérieure (38) de celui-ci, lequel siège (42) s'appuie, en assurant au moins en partie l'étanchéité, sur un bord supérieur circulaire faisant le tour (45) de l'alésage (21), ou d'un élargissement supérieur (25) de celui-ci, fait dans le corps (15).

10. Robinet d'abreuvement à soupape selon la revendication 9, caractérisé par le fait qu'une partie cylindrique inférieure (43) du piston (14) est dimensionnée de façon que, lorsque le piston (14) et la tige soupape (13) sont en position fermée, entre les extrémités en regard de ceux-ci soit formé un interstice (46), en particulier d'environ 0,2 mm de large.

11. Robinet d'abreuvement à soupape selon une ou plusieurs des revendications 8 à 10, caractérisé par le fait que le piston (14, 47, 54) est monté dans un alésage correspondant du corps (élargissement 25) de façon à dépasser en haut du corps (15, 48, 52).

12. Robinet d'abreuvement à soupape selon une ou plusieurs des revendications 8 à 11, caractérisé par le fait que le piston (14, 47, 54) a une longueur telle que, par une partie d'extrémité supérieure (38), il entre en dépassant du corps (15, 48, 52) dans une conduite (11) servant d'organe de distribution d'eau, la distance entre la face frontale supérieure (39) du piston (14, 47, 54) et la face intérieure située au-dessus (40) de la conduite de distribution d'eau (11) étant inférieure à la longueur de la partie restante du piston (14, 47, 54) se trouvant dans le corps (15, 48, 52).

13. Robinet d'abreuvement à soupape selon une ou plusieurs des revendications 8 à 12, caractérisé par le fait que la face frontale inférieure (37) du piston (47) dirigée vers la tige soupape (13) est plane pour former une surface d'appui pour une face supérieure (plane) correspondante (31) de l'extrémité de tête (29) de la tige soupape (13), de façon telle que la face frontale inférieure (37) du piston (47) s'appuie entièrement sur la face supérieure (31) de la tige soupape (13) lorsque cette dernière est en position d'étanchéité.

# FIG.1

# FIG. 2

EP 0 332 852 B1

# FIG. 3

# FIG. 4